# EUROPÄISCHE PATENTSCHRIFT

(11) **EP 0 932 785 B1**
(45) Veröffentlichungstag und Bekanntmachung des Hinweises auf die Patenterteilung: **03.01.2001**
(21) Anmeldenummer: 97948708.9
(22) Anmeldetag: 24.10.1997
(51) Int. Cl.: F16L 13/14, F16L 13/16

(54) **ROHRVERBINDUNG**
PIPE COUPLING
RACCORD DE TUYAUTERIE

(30) Priorität: 25.10.1996 DE 19645152
(43) Veröffentlichungstag der Anmeldung: 04.08.1999
(73) Patentinhaber: Mapress GmbH & Co. KG, 40764 Langenfeld (DE)
(72) Erfinder: FOERING, Herbert, D-42697 Solingen (DE); GIGOWSKI, Thomas, D-41517 Grevenbroich (DE); BERANE, Michael, D-40764 Langenfeld (DE); HARTINGS, Karl-Heinz, D-40764 Langenfeld (DE); SCHURR, Johannes, D-53227 Bonn (DE)
(74) Vertreter: Meissner, Peter E., Dipl.-Ing.
(86) Internationale Anmeldenummer: DE9702556
(87) Internationale Veröffentlichungsnummer: WO9819092

(56) Entgegenhaltungen:
- CH-A- 682 175
- DE-A- 2 233 102

## Beschreibung

Die Erfindung betrifft eine Rohrverbindung mit einem zylindrischen Rohr, dessen glattendiger Endabschnitt auf einen Fitting aufschiebbar ist gemäß dem Oberbegriff des Anspruches 1.

Eine gattungsmäßige Rohrverbindung ist aus der CH-A-682175 bekannt. Bei diesem System wird auf einen Rotguß-Fitting ein sogenanntes Verbundrohr aufgeschoben, wobei das Verbundrohr aus einem die Flüssigkeit transportierenden Innenrohr mit einem Aluminiummantel und einem darüberliegenden, den Außenschutz übernehmenden Hüllrohr besteht. Innenrohr und Hüllrohr sind aus Kunststoff gefertigt. Der Fitting weist einen in Längsrichtung sich erstreckenden Bereich auf, der mit einem Anschlag versehen ist, bis zu dem das verbindende Rohr aufgeschoben wird. Der dem Anschlag benachbarte Bereich weist zwei Innennuten auf, in denen je ein Dichtring angeordnet ist. Der restliche Abschnitt ist stark konturiert, so daß sich das aufgeschobene Rohr bei der Verpressung in die Kontur einformen kann. Nach dem Aufschieben wird von außen eine Preßzange angesetzt und das Rohr sowohl im Dichtringbereich als auch im konturierten Bereich aufgepreßt. Dabei übernimmt der Dichtringbereich die Dichtfunktion und der konturierte Bereich die axiale Sicherung. Nachteilig bei diesem System ist, daß die Herstellung des Fittings aufwendig ist, da die konturierten Endbereiche sowie der Dichtringbereich präzise hergestellt werden müssen.

Eine anders konstruierte Rohrverbindung ist in der DE 43 29 442 A1 offenbart. Diese Rohrverbindung weist eine den Fitting bildende langgestreckte Metallhülse auf, in die die beiden zu verbindenden Rohre mit gleichem Durchmesser geschoben werden. Die Metallhülse, die einen etwas größeren Durchmesser als die Rohre aufweist, ist in den Randbereichen derart umgebördelt, daß die Hülsenränder lückenlos an den Rohrwänden anliegen. Der Raum zwischen Hülse und den Rohrwänden ist durch eine in die Hülse fest eingelegte Gummimanschette ausgefüllt. Nach dem Einschieben der Rohre werden in die Hülsenwand Sicken eingepreßt mit einem derartigen Druck, daß sich jeweils in den Rohrwänden deckungsgleiche Sicken bilden. Nachteilig bei diesem System ist, daß die breite Preßbacke viel Platz beansprucht, so daß die Verpressung in engen Bereichen unmöglich wird. Außerdem wird für den größten Teil der Fittinge, insbesondere bei T-Stücken, eine Verlängerung benötigt, damit die Preßzange angesetzt werden kann. Nachteilig bei Systemen mit einem Außenfitting ist außerdem, daß nach dem Einschieben des Rohres in den Fitting von außen nicht mehr zu erkennen ist, ob die vorgeschriebene Einstecktiefe für das Rohr erreicht worden ist.

Aufgabe der Erfindung ist es, eine Rohrverbindung der gattungsmäßigen Art anzugeben, bei der die erforderliche Einstecktiefe bzw. die erforderliche Überdeckung zwischen Rohr und Fitting nach dem Einschieben bzw. Aufschieben erkennbar ist. Eine weitergehende Aufgabe besteht darin, den Fitting so zu gestalten, daß er in der Herstellung kostengünstiger ist als die bisher bekannten Lösungen.

Diese Aufgabe wird mit den im Anspruch 1 angegebenen Merkmalen gelöst. Vorteilhafte Weiterbildungen sind Bestandteil von Unteransprüchen.

Statt der Dichtmanschette wird eine Metallhülse zwischen Rohrinnenwand und Fittingaußenwand angeordnet, wobei der Dichtring im Querschnitt gesehen von der Metallhülse durchsetzt wird. Vorzugsweise ist in beiden Endbereichen der Metallhülse je ein Dichtring angeordnet. Vergleichbar wie bei der Dichtmanschette entspricht die Länge der Metallhülse der erforderlichen Überdeckung zwischen Rohr und Fitting. Auch die Metallhülse weist zur visuellen Erkennbarkeit der erforderlichen Überdekkung zwei von außen visuell unterscheidbare Abschnitte auf, dessen erster von der Fittingstirnseite her sich erstreckende Abschnitt der erforderlichen Überdeckung zwischen Rohr und Fitting entspricht und daran sich ein kürzerer Kontrollabschnitt anschließt. Vorzugsweise sind die beiden Abschnitte farblich unterschiedlich. Alternativ kann man die exakte Positionierung der Metallhülse auch dadurch sicherstellen, indem die Metallhülse an einem Ende einen radial nach innen sich erstreckenden die Fittingstirnseite abdeckenden Anschlag aufweist. Alternativ bzw. zusätzlich weist die Metallhülse in der Mitte einen radial nach außen sich erstreckenden Anschlag auf. Damit die Metallhülse nach dem Aufschieben nicht verrutscht, ist mindestens ein radial nach innen gerichtetes Spreizelement vorgesehen. Um das Aufschieben des Rohrendenbereiches bzw. das Einschieben des Fittings zusammen mit der zuvor aufgeschobenen Metallhülse in den Rohrendenbereich zu erleichtern, wird vorgeschlagen, den Fitting von der Mitte her gesehen nach beiden Seiten hin gesehen mit einer abnehmenden Konizität zu versehen.

Fitting und / oder Rohr können in C-Stahl, Edelstahl, Titan, Aluminium, Messing, Kunststoff oder Verbundwerkstoffen hergestellt werden.

Zusammenfassend sind die Hauptvorteile der vorgeschlagenen Rohrverbindung zusammengestellt.
- Von außen kontrollierbare erforderliche Überdeckung zwischen Rohr und Fitting
- Kleine Baugröße des Fittings
- Ausgleich der Fertigungstoleranzen bei Anwendung der Z-Maß-Methode zur Vormontage
- Geringerer Kraftbedarf der Verpreßzange
- Mehrebenenverpressung ist möglich
- Einfachere Herstellung des Fittings
- Geringerer Herstellaufwand
- Vormontage von Fitting und Dichtung möglich

In der Zeichnung wird anhand zweier Ausführungsbeispiele die erfindungsgemäße Rohrverbindung näher erläutert. Es zeigen:
- Figur 1: im halbseitigen Längsschnitt ein erstes Ausführungsbeispiel der erfindungsgemäßen Rohrverbindung
- Figur 2: eine Variante der Ausführung gemäß Figur 1;

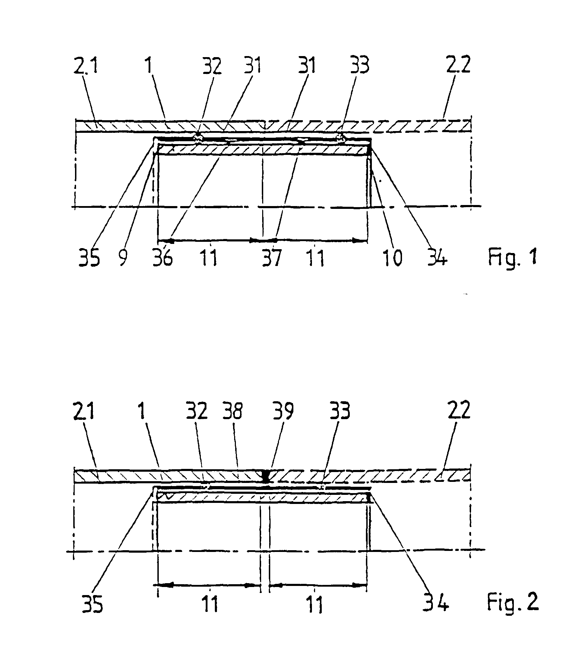

In Figur 1 ist ein erstes Ausführungsbeispiel der erfindungsgemäß ausgebildeten Rohrverbindung dargestellt. Statt einer Dichthülse ist zwischen Rohr 2.1 bzw. 2.2 und Fitting 1 eine Metallhülse 31 angeordnet. In diesem Ausführungsbeispiel ist die Metallhülse 31 in beiden Endbereichen mit je einem Dichtring 32, 33 versehen. Damit die Dichtung wirksam werden kann, werden beide Dichtringe 32, 33 im Querschnitt gesehen von der Metallhülse 31 durchsetzt. Weiterhin weist die Metallhülse 31 in diesem Ausführungsbeispiel einen radial nach innen sich erstreckenden, eine Fittingstimseite 10 abdeckenden Anschlag 34 auf. Dieser Anschlag 34 gewährleistet beim Aufschieben der Metallhülse 31 auf den Fitting 1 eine exakte Positionierung. Die Möglichkeit eines Verrutschens der Metallhülse 31 nach dem Aufschieben wird durch wenigstens ein radial nach innen sich erstreckendes Spreizelement 36 verhindert. In diesem Ausführungsbeispiel sind zwei Spreizelemente 36, 37 vorgesehen. Diese graben sich beim Versuch des Zurückschiebens der Metallhülse 31 in die äußere Mantelfläche des Fittings 1 ein. Alternativ ist mit gestrichelten Linien angedeutet, daß nach dem Aufschieben der Metallhülse 31 ein am linken Ende überkragender Lappen danach umgebogen werden kann, so daß auch auf dieser Fittingstirnseite 9 ein Anschlag 35 gebildet wird. Auf diese Weise ist die Metallhülse 31 in Form einer Vormontage exakt auf dem Fitting 1 positioniert, so daß auf das Spreizelement 36, 37 verzichtet werden kann.

Figur 2 zeigt eine Variante der Ausführung gemäß Figur 1. Bei diesem Ausführungsbeispiel weist die Metallhülse 38 keine Spreizelemente auf, ist aber dafür in der Mitte mit einem radial nach außen sich erstreckenden Anschlag 39 versehen. Auf diese Weise wird sichergestellt, daß für beide Rohre 2.1 und 2.2 die erforderliche Überdekkung 11 eingehalten wird.

## Patentansprüche

1. Rohrverbindung mit einem zylindrischen Rohr (2.1, 2.2), dessen glattendiger Endabschnitt auf einen Fitting (1) aufschiebbar ist, der mindestens einen in Längsrichtung sich erstreckenden hülsenartigen Bereich aufweist und bei der zwischen Rohr und Fitting mindestens ein Dichtring (32, 33) angeordnet ist und Rohr und Fitting mittels eines außen angesetzten mindestens in einer Radialebene das Rohr sowie den darunter liegenden Fittingabschnitt plastisch verformenden Preßwerkzeuges unlösbar miteinander verbunden ist,
dadurch gekennzeichnet,
daß zwischen Fittingaußendurchmesser und Rohrinnenwand eine auf den Fitting (1) und unter Kraftaufwand aufschiebbare Metallhülse (31, 38) angeordnet ist und die festgelegte axiale Erstreckung der Metallhülse (31, 38) in den Fitting (1) von beiden Stirnseiten her umschließt und die Länge der Metallhülse so gewählt ist, daß sie der erforderlichen Überdeckung zwischen Rohr (2.1, 2.2) und Fitting (1) entspricht und diese dann gegeben ist, wenn nach dem Aufschieben des Rohrendenbereiches auf die Metallhülse (31, 38) bzw. nach dem Einschieben des Fittings zusammen mit der zuvor aufgeschobenen Metallhülse (31, 38) in den Rohrendenbereich die dem Fitting (1) zugewandte Stirnseite (9, 10) des Rohrendenbereiches genau mit einer auf der Metallhülse (31, 38) angebrachten Markierung oder Anschlag (39) zusammenfällt und der Dichtring (32, 33) im Querschnitt gesehen von der Metallhülse (31, 38) durchsetzt ist.

2. Rohrverbindung nach Anspruch 1,
dadurch gekennzeichnet,
daß in beiden Endbereichen der Metallhülse (31) je ein Dichtring (32, 33) vorgesehen ist.

3. Rohrverbindung nach den Ansprüchen 1 und 2,
dadurch gekennzeichnet,
daß die Metallhülse (31) mindestens ein radial nach innen sich erstreckendes Spreizelement (36, 37) aufweist.

4. Rohrverbindung nach einem der Ansprüche 1 - 3,
dadurch gekennzeichnet,
daß die Metallhülse (31, 38) an einem Ende einen radial nach innen sich erstreckenden die Fittingstirnseite (9, 10) abdeckenden Anschlag (34, 35) aufweist.

5. Rohrverbindung nach einem der Ansprüche 1 - 3,
dadurch gekennzeichnet,
daß die Metallhülse (38) in der Mitte einen radial nach außen sich erstreckenden Anschlag (39) aufweist.

6. Rohrverbindung nach einem der Ansprüche 1 - 3,
dadurch gekennzeichnet,
daß die Metallhülse zwei von außen visuell unterscheidbare Abschnitte aufweist, dessen erster von der Fittingstirnseite (9, 10) her sich erstreckende Abschnitt der erforderlichen Überdeckung zwischen Rohr (2.1, 2.2) und Fitting (1) entspricht und daran sich ein kürzerer Kontrollabschnitt anschließt.

7. Rohrverbindung nach Anspruch 6,
dadurch gekennzeichnet,
daß die beiden Abschnitte der Metallhülse farblich unterschiedlich sind.

## Claims

1. Pipe connection with a cylindrical pipe (2.1, 2.2) whose smoothed end section can be pushed onto a fitting (1), which comprises at least one sleeve-like section that extends longitudinally and in which at least one sealing ring (32, 33) is arranged between the pipe and the fitting, and the pipe and fitting are connected permanently together by means of a compressing tool positioned on the outside, which plastically deforms the pipe and the fitting section under it in at least one radial plane,
**characterised in that**
between the outside diameter of the fitting and the inside wall of the pipe is positioned a metal sleeve (31, 38) which can be pushed forcibly onto the fitting (1) and the fixed axial extension of the metal sleeve (31, 38) spans over both ends of the fitting (1), the length of the metal sleeve being chosen such that it corresponds to the required overlap between the pipe (2.1, 2.2) and the fitting (1), and this overlap is established when after pushing the end area of the pipe over the metal sleeve (31, 38) or after inserting the fitting with the metal sleeve (31, 38) previously pushed over it into the end area of the pipe, the front (9, 10) of the pipe end facing the fitting coincides exactly with a mark or end-stop (39) on the metal sleeve (31, 38) and, viewed in cross-section, the metal sleeve (31, 38) passes through the seals (32, 33).

2. Pipe connection according to Claim 1,
**characterised in that**
a sealing ring (32, 33) is provided in each of the two end areas of the metal sleeve (31).

3. Pipe connection according to Claims 1 and 2,
**characterised in that**
the metal sleeve (31) comprises at least one expanding element (36, 37) which extends radially inwards.

4. Pipe connection according to any of Claims 1 to 3,
**characterised in that**
at one end the metal sleeve (31, 38) has an end-stop (34, 35) which extends radially inwards and covers the end (9, 10) of the fitting.

5. Pipe connection according to any of Claims 1 to 3,
**characterised in that**
in the middle, the metal sleeve (38) has an end-stop (39) extending radially outwards.

6. Pipe connection according to any of Claims 1 to 3,
**characterised in that**
the metal sleeve comprises two sections visually distinguishable from the outside, the first of which extends from the end (9, 10) of the fitting by an amount corresponding to the required overlap between the pipe (2.1, 2.2) and the fitting (1), and this is followed by a shorter control section.

7. Pipe connection according to Claim 6,
**characterised in that**
the two sections of the metal sleeve are coloured differently.

## Revendications

1. Liaison pour tube, comportant un tube cylindrique (2.1 , 2.2), dont le tronçon d'extrémité lisse peut être placé sur un raccord (1), qui présente au moins une zone du type manchon s'étendant en direction longitudinale et pour laquelle, entre le tube et le raccord, au moins une bague d'étanchéité (32, 33) est agencée, le tube et le raccord étant reliés ensemble de façon inamovible au moyen d'un outil de pressage, déformant de façon plastique le tube ainsi que le tronçon de raccord sous-jacent, au moins dans un plan radial, agencé à l'extérieur,
caractérisée en ce qu'il est agencé, entre le diamètre externe du raccord et la paroi interne du tube, un manchon métallique (31, 38) pouvant être placé sur le raccord (1) et par force, et l'extension axiale déterminée du manchon métallique (31, 38) entoure le raccord (1) à partir des deux faces frontales et la longueur du manchon métallique est choisie de sorte qu'elle correspond au recouvrement nécessaire entre le tube (2.1, 2.2) et le raccord (1), et cela est obtenu quand, après la mise en place de la zone d'extrémité du tube sur le manchon métallique (31, 38) ou après l'insertion du raccord en même temps que le manchon métallique préalablement placé (31, 38) dans la zone d'extrémité du tube, la face frontale (9, 10), en regard du raccord (1), de la zone d'extrémité du tube coïncide précisément avec une butée ou un repère (39) prévu sur le manchon métallique (31, 38) et la bague d'étanchéité (32, 33), en section transversale, est traversée par le manchon métallique (31, 38).

2. Liaison pour tube selon la revendication 1,
caractérisée en ce qu'une bague d'étanchéité (32, 33) est prévue, à chaque fois, aux deux zones d'extrémité du manchon métallique (31).

3. Liaison pour tube selon les revendications 1 et 2,
caractérisée en ce que le manchon métallique (31) présente au moins un élément d'écartement (36, 37) s'étendant radialement vers l'intérieur.

4. Liaison pour tube selon une des revendications 1 - 3,
caractérisée en ce que le manchon métallique (31, 38) présente, à une extrémité, une butée (34, 35), s'étendant radialement vers l'intérieur, recouvrant la face frontale (9, 10) du raccord.

5. Liaison pour tube selon une des revendications 1 - 3,
caractérisée en ce que le manchon métallique (38) présente, au centre, une butée (39) s'étendant radialement vers l'extérieur.

6. Liaison pour tube selon une des revendications 1 - 3,
caractérisée en ce que le manchon métallique présente deux tronçons pouvant être distingués visuellement de l'extérieur, dont le premier tronçon s'étendant à partir de la face frontale (9, 10) du raccord correspond au recouvrement nécessaire entre le tube (2.1, 2.2) et le raccord (1), et un plus court tronçon de contrôle s'y raccorde.

7. Liaison pour tube selon la revendication 6,
caractérisée en ce que les deux tronçons du manchon métallique sont différemment colorés.
